# EUROPÄISCHE PATENTANMELDUNG

(11) **EP 2 213 987 A1**
(43) Veröffentlichungstag der Anmeldung: **04.08.2010**
(21) Anmeldenummer: 09151945.4
(22) Anmeldetag: 03.02.2009
(51) Int. Cl.: G01D 5/347

(54) **Optoelektronische Lagemesseinrichtung und optoelektronisches Lagemessverfahren**

(71) Anmelder: Leica Geosystems AG, 9435 Heerbrugg (CH)
(72) Erfinder: Lippuner, Heinz, CH-9445, Rebstein (CH)
(74) Vertreter: Kaminski Harmann

(57) **Zusammenfassung**

Eine optoelektronische Lagemesseinrichtung weist einen Codeträger (1) auf, der wenigstens einen optisch erfassbaren Positionscode (2) trägt, und von einer Strahlungsquelle (31) mit optischer Strahlung beleuchtet wird. Durch wenigstens ein Erfassungselement (32) wird wenigstens ein Teil der optischen Strahlung erfasst, wodurch ein vom Positionscode (2) abhängiges Signal erzeugbar und somit eine Lage des Codeträgers (1) relativ zum Erfassungselement (32) erfassbar ist, wobei der Codeträger relativ zum Erfassungselement (32) mit einem Freiheitsgrad - insbesondere rotatorisch oder translatorisch - bewegbar ist. Dabei sind Strahlungsquelle (31) und Codeträger (1) derart angeordnet und ausgebildet sind, dass die optische Strahlung in den Codeträger (1) eingekoppelt und zumindest teilweise in einem in der Ausdehnungsebene des Codeträgers (1) liegenden Strahlgang im Inneren des Codeträgers (1) geführt wird, insbesondere bis zum Positionscode (2) geführt wird.

## Beschreibung

Die Erfindung betrifft eine optoelektronische Lagemesseinrichtung nach dem Oberbegriff des Anspruchs 1 und ein optoelektronisches Lagemessverfahren nach dem Oberbegriff des Anspruchs 14.

Das Bestimmen von Richtungen, Winkeln und Längen als Lagen ist in vielen Anwendungsbereichen gefordert, wie beispielsweise in der geodätischen und industriellen Vermessung. Entwicklungen in der Winkelmesstechnik führten über mechanische Ablesevorgänge bis zur vollautomatisierten Winkelmessung nach dem heutigen Stand der Technik.

Bekannte automatisierte Lagemessvorrichtungen umfassen im Allgemeinen einen Codeträger und eine Abtasteinrichtung. Bei Winkelmesseinrichtungen ist der Codeträger üblicherweise relativ zur Abtasteinrichtung um eine Achse drehbar ausgebildet, wobei dann eine Winkellage des Codeträgers die zu messende Grösse darstellt. Der Codeträger kann zum Beispiel eine Teilung oder Codierung zur Positionsbestimmung aufweisen, wobei die Codierung auf einer Oberfläche oder Mantelfläche des Codeträgers aufgebracht sein kann.

Zur automatischen Erfassung der Lage wird der relativ zur Abtasteinrichtung bewegbare Codeträger mittels unterschiedlicher Techniken abgetastet. Bekannte Abtastverfahren sind elektronisch-magnetische, elektronische und optisch-elektronische Verfahren. Die folgenden Ausführungen beziehen sich auf optisch-elektronische Abtastverfahren und Abtasteinrichtungen, die insbesondere eine Beleuchtungseinrichtung und einen Detektor aufweisen.

Zur Bestimmung beispielsweise von Winkelstellungen von 0° bis 360° ist die Codierung üblicherweise in einem Vollkreis angeordnet. Die Winkelauflösung des Vollkreises bestimmt sich nach Art der Codierung und nach der zum Lesen der Codierung eingesetzten Abtasteinrichtung. So wird beispielsweise durch Aufbringen eines Codes in mehreren Spuren oder durch eine feinere Teilung die Winkelauflösung gesteigert, wobei die erreichbare Auflösung aus fertigungs- und kostentechnischen Gründen beschränkt ist. Zum Lesen des Codes sind z.B. Anordnungen von einem oder mehreren Detektoren bekannt. CCD-Zeilen-Arrays oder CCD-FlächenArrays können beispielsweise solche Detektoren darstellen. Die Ausbildung des Codes kann durch Strukturierung einer reflektierenden Oberfläche oder auch eines durchleuchtbaren Materials erfolgen, so dass die Abbildung in Transmission, Reflexion oder in einem kombinierten Verfahren erfolgt.

Die schweizerische Patentschrift CH 658514 A5 offenbart eine solche Vorrichtung zum Messen einer Winkellage. Dabei wird eine Marke, deren Lage in Bezug auf eine Fläche von Sensoren die zu messende Grösse darstellt, auf diese Fläche abgebildet. Die Ausgangssignale der Sensoren werden in eine Auswerteschaltung geführt, die die Verteilung der Intensität der durch die Sensoren erzeugten Signale sequentiell ermittelt. Aus der Intensitätsverteilung kann die Lage der Marke in Bezug auf die Fläche von Sensoren abgeleitet werden.

Die Abmessungen einer Lagemesseinrichtung für geodätische Geräte sind vorteilhaft gering zu halten. Um eine entsprechend kleine und wenig aufwendige Bauweise zu erlauben, werden seit einiger Zeit die Beleuchtungseinrichtung und der Detektor der Lagemesseinrichtung auf einer gemeinsamen, elektrisch versorgten Platine angeordnet, und nicht wie zuvor ober- und unterhalb eines Codeträgers jeweils auf einer separaten elektrisch versorgten Platine. Bei Lagemesseinrichtungen des Standes der Technik mit einer nebeneinander liegenden Anordnung des Detektors und der Beleuchtungseinrichtung werden die emittierten Strahlen beispielsweise durch ein Umlenkelement mit zwei planen, reflektierenden Flächen so umgelenkt, dass eine Abbildung des Codes durch den im Strahlgang nachgeordneten Codeträger auf dem Detektor erzeugt wird. Optional können dabei die emittierten Strahlen mittels einer der Beleuchtungsquelle direkt nachgeordneten Optik kollimiert werden.

Beispielsweise zeigt die US-Patentschrift US 7,145,127 B2 ein Umlenkelement für eine Lagemesseinrichtung, wobei das Umlenkelement zwei gegeneinander ausgerichtete Flächen zur zweifachen Reflexion der emittierten Strahlen aufweist und einen auf ein Sensor abbildbaren Code trägt und somit zusätzlich als Codeträger ausgebildet ist.

Eine Aufgabe der Erfindung ist somit die Bereitstellung einer Lagemesseinrichtung mit vereinfachtem Aufbau bzw. eines hierfür geeigneten Lagemessverfahrens.

Eine weitere Aufgabe ist eine Verringerung der Grösse sowie die Erhöhung der Robustheit der Lagemesseinrichtung.

Diese Aufgaben werden durch die Verwirklichung der kennzeichnenden Merkmale der unabhängigen Ansprüche gelöst.

Merkmale, die die Erfindung in alternativer oder vorteilhafter Weise weiterbilden, sind den abhängigen Patentansprüchen zu entnehmen.

Die Erfindung beruht auf einer grundlegenden Veränderung des zur Beleuchtung des Positionscodes verwendeten Strahlgangs. Im Stand der Technik erfolgt die Beleuchtung des Positionscode gemäss Durch- oder Auflichtverfahren, indem die Strahlung möglichst senkrecht auf den Codeträger geführt wird. Je nach konkreter Ausgestaltung sind hierfür Umlenkelemente oder komplizierte Strahlgänge erforderlich, wodurch neben der hierfür erforderlichen Grösse der Vorrichtung auch ein erhöhter Justageaufwand sowie eine verringerte Robustheit resultieren. Erfindungsgemäss wird die zur Beleuchtung verwendete Strahlung in den Codeträger selbst eingekoppelt und dort zumindest streckenweise geführt, wobei der Strahlgang zumindest teilweise in der Ausdehnungsebene des Codeträgers sowie in den meisten Fällen auch des Positionscodes liegt. Dies bedeutet, dass die Ausbreitungsrichtung der Strahlung bzw. die optische Achse des Strahlgangs in dieser Ebene liegen, was trotz der Verwendung eines ebenen Codeträgers bzw. eines flächigen bzw. linear ausgedehnten Codes eine flache Bauweise ermöglicht. Bevorzugterweise erfolgt eine Strahlführung bis zum Positionscode selbst, so dass dieser aus dem Codeträger heraus beleuchtet wird.

Als geeignete Codeträgermaterialien können hierfür bereits die allgemein im Stand der Technik verwendeten Werkstoffe Glas- oder Kunststoff Verwendung finden, in denen eine Strahlführung durch Reflexion an den Grenzflächen möglich ist. Grundsätzlich können jedoch auch Hohlkörper, z.B. aus Metall, verwendet werden, wobei hier eine Reflexion an den Innenflächen erfolgt.

Für den Anwendungszweck eines Winkelmessers oder Rotationsencoders kann beispielsweise ein Kunststoffkreis oder Kunststoffring mit eingeprägtem diffraktiven Code Verwendung finden, wie er beispielsweise in der WO 2008/141817 beschrieben wird. In diesen Kunststoffkreis wird von innen oder aussen mit einer Lichtquelle die Beleuchtungsstrahlung durch die Schmalseite eingekoppelt. Die den Positionscode repräsentierende Teilung besteht aus abwechselnd vorkommenden gestörten und ungestörten Partien an der Oberfläche der Scheibe, gebildet aus diffraktiven, refraktiven, absorbierenden oder reflektierenden Strukturen. Dementsprechend kann der Positionscode bspw. in Reflektion oder Transmission als Phasen- oder Amplitudengitter ausgebildet sein. Als Empfänger dient ein Flächen- oder Zeilenarray auf der Seite des Kreises auf der die Oberfläche teilweise gestört ist oder bei entsprechender Ausführung auch auf der anderen Seite, wobei eine Mehrzahl von Arrays und Lichtquellen verwendet werden kann, zur Bestimmung oder Elimination von systematischen Fehlern, wie z.B. Exzentrizitätsfehlern, oder zur Erhöhung der Messgenauigkeit. Solche hochpräzisen Winkelsensoren finden typischerweise Anwendung in geodätischen Messgeräten oder abtastenden Messmaschinen, wie z.B. Koordinatenmessgeräten.

Durch die zumindest teilweise Strahlführung im Codeträger können sehr flache und kompakte Anordnungen realisiert werden, indem eine Einkopplung der Strahlung von der Seite des Detektors her oder rechtwinklig hierzu erfolgt. Im Gegensatz zu Lösungen des Stands der Technik muss hierdurch keine Strahlführung auf die dem Detektorelement gegenüberliegende Seite mehr erfolgen. Diese Ausgestaltung erlaubt somit auch die Anordnung von Strahlquelle, Detektorelement sowie von Ansteuer- und Auswerteelektronik auf einem einzigen Träger, z.B. einer gedruckten Leiterplatte oder Platine.

Die erfindungsgemässe Anordnung ist hierbei sowohl für ein Rotation messende Winkelsensoren als auch für die Messung von linearen Verschiebungen geeignet. Auch kann eine Verwendung sowohl für absolut als auch für relativ bzw. inkrementell messende Systeme erfolgen.

Geeignete Verfahren zur Herstellung geeigneter Codeträger stehen beispielsweise in Form spezieller Kontaktverfahren, z.B. durch Spritzguss, zur Verfügung. Damit können codetragenden Bauteile oder Codeträger als spezielle Komponenten auch aus Kunststoff, beispielsweise aus Polycarbonat, hergestellt werden, für die schnelle und einfache Reproduktionsverfahren zur Verfügung stehen. Insbesondere können auch Verfahren zur Anwendung kommen, wie sie im Bereich der Herstellung optischer Speichermedien, z.B. von Compact Discs (CD), üblich sind.

Das Eintrittsfenster der Strahlung und die zur Strahlführung verwendeten Flächen können bei den verwendeten Glas- oder Kunststoffmaterialien poliert werden. Zur Verminderung oder Erhöhung des Reflexionsvermögens der Oberfläche, d.h. zur Einkopplung und nachfolgend zur Strahlführung im Inneren des Codeträgers, können zudem entsprechende Beschichtungen auf dem Codeträger aufgebracht werden.

Die erfindungsgemässe Lagemesseinrichtung und das Lagemessverfahren wird nachfolgend anhand von in den Zeichnungen schematisch dargestellten Ausführungsbeispielen rein beispielhaft näher beschrieben oder erläutert.

Im Einzelnen zeigen
- Fig.1: eine Ringscheibe als Codeträger mit einem optisch erfassbaren Positionscode nach dem Stand der Technik;
- Fig.2: eine Lagemesseinrichtung des Standes der Technik,
wobei Beleuchtungsquelle und Detektor auf unterschiedlichen Seiten des Codeträger angeordnet sind;
- Fig.3: eine Lagemesseinrichtung des Standes der Technik,
wobei eine Strahlumlenkung auf der der Beleuchtungsquelle und dem Detektor gegenüberliegenden Seite des Codeträgers erfolgt;
- Fig.4-b: eine Erläuterung des Aufbaus einer erfindungsgemässen Lagemesseinrichtung für das Beispiel eines Winkelmessers;
- Fig.5: eine Erläuterung des Grundprinzips der Strahlführung in einer erfindungsgemässen Lagemesseinrichtung;
- Fig.6: eine erste Ausführungsform der Anordnung von Komponenten in einer erfindungsgemässen Lagemesseinrichtung;
- Fig.7: eine zweite Ausführungsform der Anordnung von Komponenten in einer erfindungsgemässen Lagemesseinrichtung;
- Fig.8: eine dritte Ausführungsform der Anordnung von Komponenten in einer erfindungsgemässen Lagemesseinrichtung;
- Fig.9: eine vierte Ausführungsform der Anordnung von Komponenten in einer erfindungsgemässen Lagemesseinrichtung;
- Fig.10: eine fünfte Ausführungsform der Anordnung von Komponenten in einer erfindungsgemässen Lagemesseinrichtung;
- Fig.11: eine sechste Ausführungsform der Anordnung von Komponenten in einer erfindungsgemässen Lagemesseinrichtung;
- Fig.12: eine siebte Ausführungsform der Anordnung von Komponenten in einer erfindungsgemässen Lagemesseinrichtung;
- Fig.13: eine achte Ausführungsform der Anordnung von Komponenten in einer erfindungsgemässen Lagemesseinrichtung;
- Fig.14: eine neunte Ausführungsform der Anordnung von Komponenten in einer erfindungsgemässen Lagemesseinrichtung;
- Fig.15: eine erste Ausführungsform der Strahlführung in einer erfindungsgemässen Lagemesseinrichtung;
- Fig.16: eine zweite Ausführungsform der Strahlführung in einer erfindungsgemässen Lagemesseinrichtung;
- Fig.17: eine dritte Ausführungsform der Strahlführung in einer erfindungsgemässen Lagemesseinrichtung;
- Fig.18: eine vierte Ausführungsform der Strahlführung in einer erfindungsgemässen Lagemesseinrichtung;
- Fig.19: eine fünfte Ausführungsform der Strahlführung in einer erfindungsgemässen Lagemesseinrichtung;
- Fig.20: eine sechste Ausführungsform der Strahlführung in einer erfindungsgemässen Lagemesseinrichtung und
- Fig.21: eine siebte Ausführungsform der Strahlführung in einer erfindungsgemässen Lagemesseinrichtung.

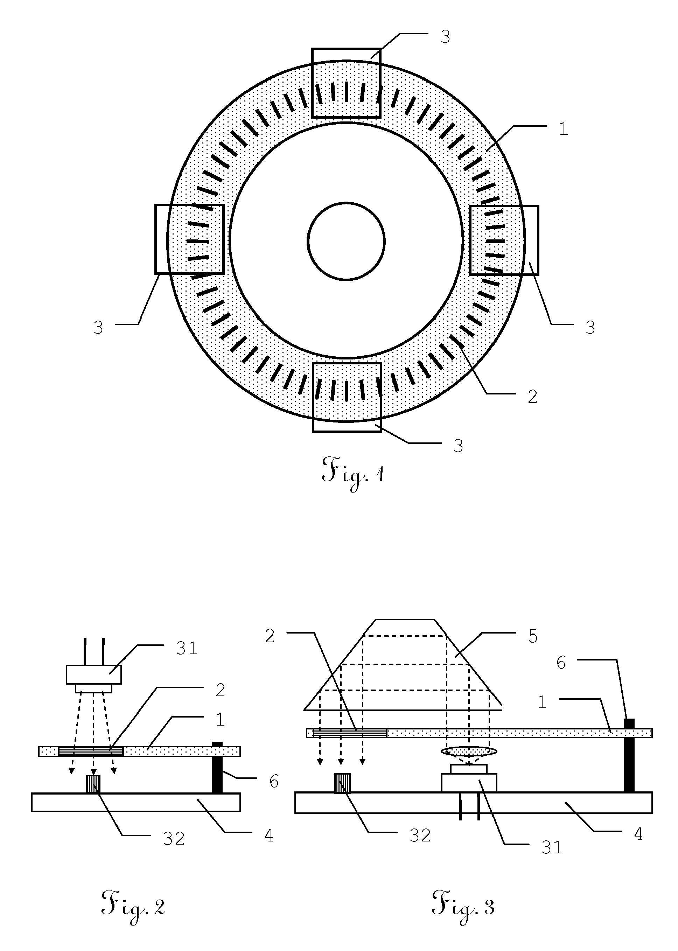

Als ein typisches Beispiel für eine Lagemesseinrichtung nach dem Stand der Technik wird in Fig. 1 eine Ringscheibe als Codeträger 1 mit einem optisch erfassbaren Positionscode 2 zum Bestimmen einer Dreh-Lage dargestellt. Der Codeträger 1 ist als Ringsegment und beispielsweise aus Kunststoff ausgebildet und weist als Positionscode 2 eine konzentrisch angeordnete Codespur auf. Die weissen Bereiche des Positionscodes 2 sind lichtdurchlässig und die schwarzen Bereiche lichtundurchlässig ausgebildet. Durch ein Anleuchten eines positionsabhängigen Teils des Codeträgers 1 kann eine Schattenprojektion mit codierter Information über den angeleuchteten Teil des Codeträgers 1, und somit mit Information über eine Dreh-Lage des Codeträgers 1 relativ zu einer beleuchtenden Strahlungsquelle, die in den folgenden Figuren gezeigt wird, erzeugt werden. Zur Erfassung der Information wird hierbei eine Lesekopfkombination 3 aus Strahlungsquelle und Detektor verwendet, wobei bspw. zur Bestimmung oder Beseitigung von Fehlern auch eine Mehrzahl von Lesekopfkombinationen 3 verwendet werden kann.

Fig.2 zeigt eine Lagemesseinrichtung des Standes der Technik, wobei Strahlungsquelle 31 und ein Detektor als Erfassungselement 32 auf unterschiedlichen Seiten des Codeträgers 1 angeordnet sind. Als Strahlungsquelle 31 wird in diesem Beispiel eine LED verwendet, die optische Strahlung direkt und ohne Umlenkung auf den Positionscode 2 emittiert. Die emittierte Strahlung ist durch die gestrichelten Linien dargestellt.

Der Codeträger 1 weist Positionscode 2 auf und ist rotatorisch beweglich um eine Rotationsachse 6 ausgebildet. In dieser typischen Anordnung des Stands der Technik ist zwar der Strahlgang vergleichsweise einfach ausgeführt, allerdings ist es nicht möglich, sowohl Strahlungsquelle 31 als auch Erfassungselement 32 auf ein- und derselben Trägerstruktur, z.B. einer Leiterplatte 4, anzuordnen.

In Fig.3 wird eine Lagemesseinrichtung des Standes der Technik gezeigt, wobei eine Strahlumlenkung auf der der Strahlungsquelle 31 und dem Erfassungselement 32 gegenüberliegenden Seite des Codeträgers 1 erfolgt. In diesem Beispiel wird eine Laserdiode als Strahlungsquelle 31 verwendet, die so angeordnet ist, dass die emittierte Strahlung senkrecht durch oder um den Codeträger 1 und über ein Umlenkelement 5 wieder zurück auf den Positionscode 2 und nachfolgend auf das Erfassungselement 32 geführt wird. In diesem Beispiel können zwar sowohl Strahlungsquelle 31 als auch Erfassungselement 32 auf ein- und derselben Leiterplatte 4 angeordnet werden, jedoch ist ein Umlenkelement 5 auf der gegenüberliegenden Seite des Codeträgers 1 erforderlich, welcher die Strahlung zurück auf den Positionscode 2 lenkt.

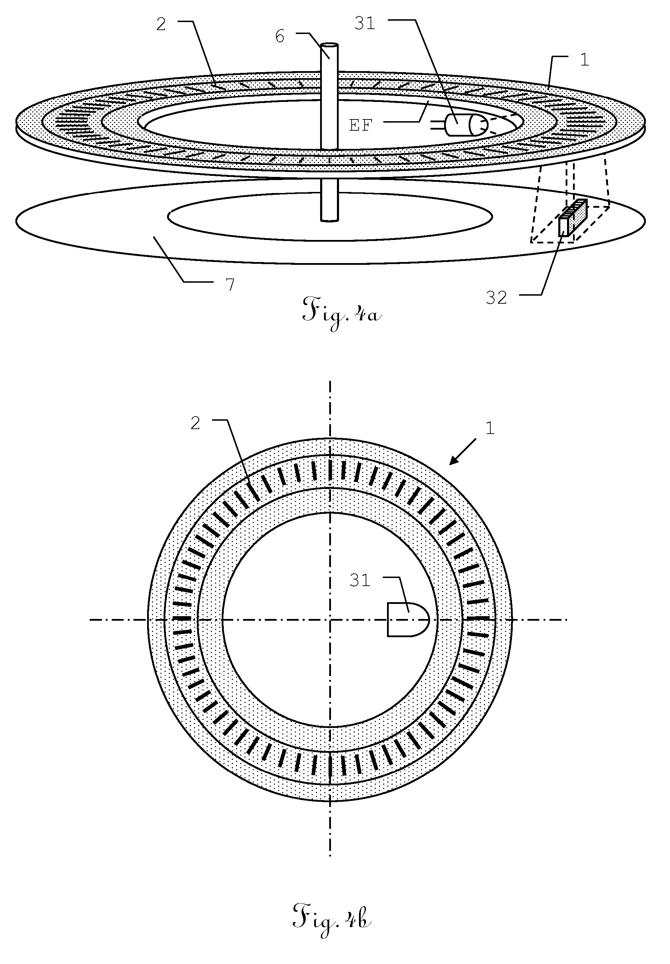

Beide Anordnungsvarianten des Stands der Technik verhindern eine flache und einfache bzw. robuste Anordnung der Komponenten. Ein dies ermöglichender erfindungsgemässer Aufbau einer Lagemesseinrichtung für das Beispiel eines Winkelmessers wird in Fig.4a-b gezeigt, wobei Fig.4a eine Seitenansicht und Fig.4b eine Draufsicht zeigen.

Die erfindungsgemässe optoelektronische Lagemesseinrichtung weist einen Codeträger 1 mit ringförmiger Geometrie auf, der einen optisch erfassbaren Positionscode 2 trägt und gegenüber einer einen Zeilensensor als Erfassungselement 32 tragenden Komponente rotierbar ist. Der Positionscode 2 kann insbesondere als diffraktiver Code ausgebildet sein. Zur Beleuchtung wird bspw. eine Laserdiode oder eine LED als Strahlungsquelle 31 verwendet, die eine - hier nicht dargestellte - Blende aufweist und optische Strahlung emittiert, die über den Positionscode 2 auf das Erfassungselement 32 zum Empfang wenigstens eines Teiles der optischen Strahlung geführt wird, wodurch ein vom Positionscode abhängiges Signal erzeugbar und somit eine Lage des Codeträgers 1 relativ zum Erfassungselement 32 erfassbar ist. Hierbei kann je nach Auslegung von Lagemesseinrichtung oder Positionscode jedoch auch ein andersartiger Sensor, z.B. ein Flächensensor oder Flächen-Array Verwendung finden. Der Codeträger 1 ist relativ zum Erfassungselement 32 mit einem Freiheitsgrad bewegbar, d.h. in diesem Beispiel um eine Achse 6 rotierbar. Erfindungsgemäss sind Strahlungsquelle 31 und Codeträger 1 derart angeordnet und ausgebildet, dass die optische Strahlung in den Codeträger 1 eingekoppelt und zumindest teilweise in einem in der Ausdehnungsebene des Positionscodes 2 liegenden Strahlgang im Inneren des Codeträgers 1 geführt wird. Die Strahlführung kann hierbei bis zum Positionscode 2 im Inneren des Codeträgers 1 erfolgen.

Hierfür ist der Codeträger 1 aus einem für die optische Strahlung durchlässigem Material ausgebildet, insbesondere aus Glas oder Polycarbonat, so dass die Strahlung im inneren des Codeträgermaterials selbst geführt werden kann. Zudem können im Strahlgang an der Oberfläche oder im Inneren des Codeträgers 1 strahlformende und/oder strahlumlenkende Elemente integriert werden. In diesem Beispiel wird die optische Strahlung radial von innen in den Codeträger eingekoppelt, d.h. über die als Eintrittsfenster EF dienende schmale Innenseite des Rings. Erfindungsgemäss kann die Strahlung jedoch auch von radial aussen in die Mantelfläche oder in axialer Richtung durch eine der Stirnflächen in den Codeträger 1 eingekoppelt werden.

In den inneren oder äusseren Rand des Ringes bzw. Kreises können optische Elemente integriert bzw. der Rand als optisch wirksam und strahlverändernd ausgebildet sein. Insbesondere können erfindungsgemäss Abbildungs- und Umlenkelemente Verwendung finden, wie z.B. Linsen, Spiegelflächen oder diffraktive Elemente.

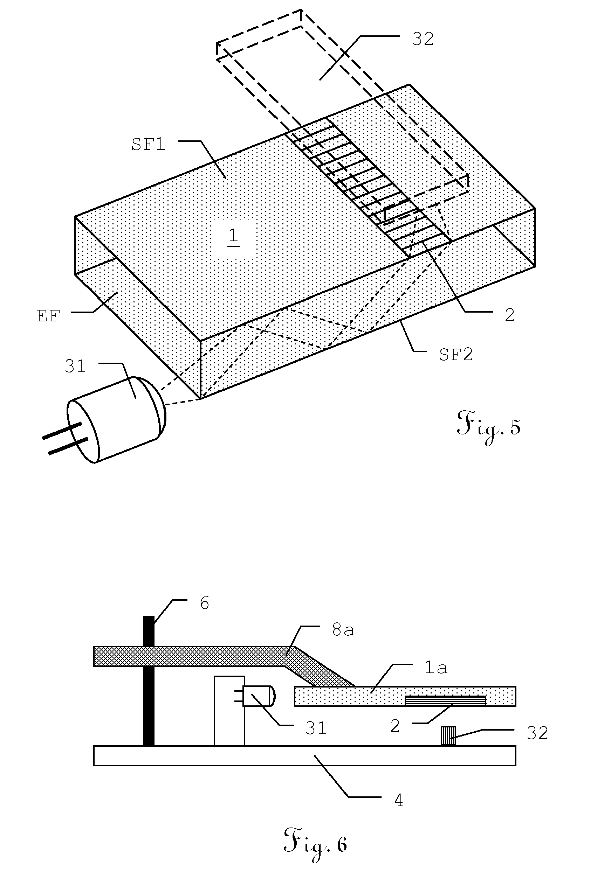

Das Grundprinzip der Strahlführung in einer erfindungsgemässen Lagemesseinrichtung wird in Fig.5 näher erläutert, wobei die gezeigte Darstellung sowohl die in Fig.4a-b dargestellte Lagemesseinrichtung mit Winkelmessfunktionalität wie auch Lagemesseinrichtung zur Bestimmung linearer Verschiebungen gleichermassen betreffen kann.

Die von der Strahlungsquelle 31 emittierte Strahlung wird über ein Eintrittsfenster EF in den Codeträger 1 eingekoppelt und dort im Inneren durch Reflexionen an den beiden senkrecht zum Eintrittsfenster orientierten Stirnflächen SF1 und SF2 reflektiert und bis zum diffraktiv wirkenden Positionscode 2 geführt. Dessen Beugungsmuster wird auf das hier nur angedeutet dargestellte Erfassungselement 32 projiziert. Werden mehrere Strahlungsquellen 32 verwendet, so kann durch deren unterschiedliche Winkel zum Eintrittsfenster EF auch eine Durchmischung und damit Homogenisierung der Strahlung erreicht werden.

In den Fig.6-14 werden durch mehrere Ausführungsformen die Anordnungen von Empfangselement 32 und Strahlungsquelle 31 auf derselben Seite des Codeträgers 1 veranschaulicht, wie sie durch die erfindungsgemässe Ausgestaltung der Lagemesseinrichtung möglich werden.

Fig.6 zeigt hierbei eine erste Ausführungsform der Anordnung der Komponenten in einer erfindungsgemässen Lagemesseinrichtung. Empfangselement 32 und Strahlungsquelle 31 sind hierbei auf einer gemeinsamen Leiterplatte 4 bzw. Platine angeordnet, wobei allerdings die Strahlungsquelle 31 so an einem Ausleger befestigt ist, dass deren Strahlung parallel zur Ausdehnung der Leiterplatte 4 emittiert und somit in die Ebene des Codeträgers 1a eingekoppelt werden kann. Dieser ist wie in den Fig.4a-b und 5 als Ring ausgeführt, wobei die Verbindung mit der Achse 6 über eine die Aufnahme nach oben versetzende Halterung 8a hergestellt wird, so dass für die Strahlungsquelle 31 genug Platz verbleibt.

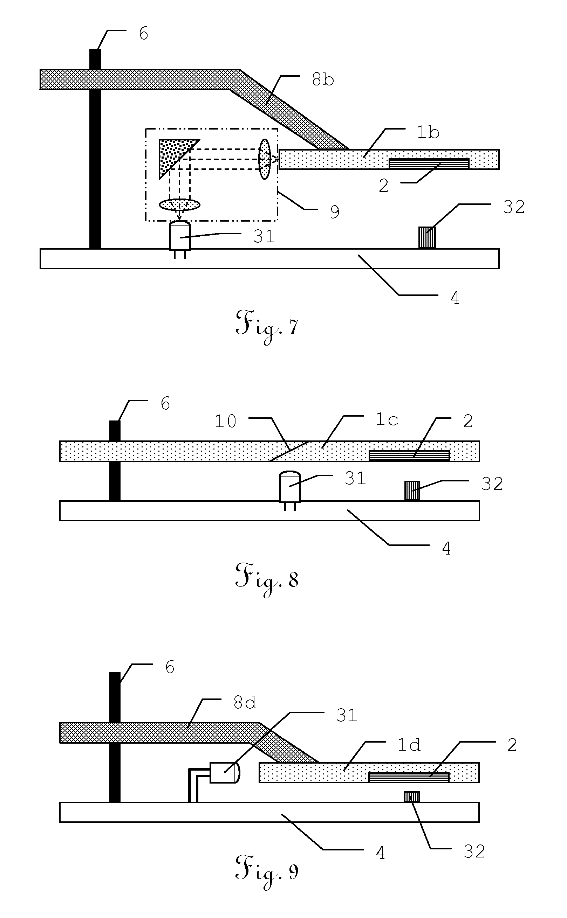

Eine direkte Anordnung von Strahlungsquelle 31 und Empfangselement 32 auf der Leiterplatte 4 zeigt Fig.7 für eine zweite Ausführungsform. Hier werden beide Komponenten direkt auf die Leiterplatte 4 montiert, so dass beide eine zu dieser senkrechte Emissions- bzw. Empfangsrichtung zeigen. Der Codeträger 1b ist wiederum über eine die Aufnahme nach oben versetzende Halterung 8b mit der Achse 6 verbunden. Allerdings erfolgt die Einkopplung der Strahlung nunmehr durch eine umlenkende Strahlführung, wobei eine kollimierende, über eine Prisma oder eine Spiegelfläche umlenkende und nachfolgend wieder fokussierende Optikanordnung 9 zum Einsatz kommen kann.

Eine noch flachere Anordnung mit ebenfalls direkter Befestigung der Komponenten auf einer gemeinsamen Leiterplatte 4 zeigt Fig.8 für eine dritte Ausführungsform. Die optische Strahlung wird hier auf derselben Seite in den Codeträger 1c eingekoppelt, auf der das Erfassen der Projektion durch das Erfassungselement 32 erfolgt, d.h. die Einkopplung erfolgt nicht mehr durch die Innenseite des Ringes als Eintrittsfenster, sondern nutzt hierfür die untere, der Leiterplatte 4 zugewandte Stirnfläche des Codeträgers 1c, der direkt mit der Achse 6 verbunden ist. Die Strahlumlenkung in die Ebene der Ausdehnung des Codeträgers 1c und damit in dessen Bewegungsebene erfolgt durch ein in den Codeträger 1c integriertes Umlenkelement, in diesem Fall durch eine reflektierende Grenzschicht 10. Diese kann beispielsweise dadurch erzeugt werden, dass der Codeträger 1c aus zwei Teilen aus identischem Material zusammengesetzt wird, wobei die Verbindungsfläche als Schrägschliff ausgeführt sein kann. Dieser Schliff kann dabei noch zusätzlich reflektionserhöhend beschichtet werden. Nach Eintritt in den Codeträger 1c und Umlenkung wird dann die Strahlung in der Ebene der Bewegung und der Ausdehnungsebene des Positionscodes 2 geführt.

Bei der in Fig.9 gezeigten vierten Ausführungsform wird eine Laserdiode oder LED als Strahlungsquelle 31 so mit abgewinkelten Kontakten auf der Trägerplatte 4 angeordnet, dass ihre Emissionsrichtung parallel zur Trägerplatte 4 verläuft und eine Einkopplung in die Ebene des Codeträgers 1d erfolgen kann. In diesem Beispiel ist der Codeträger 1d wiederum über eine die Aufnahme bzw. die Aufnahmeebene mit der Achse 6 nach oben versetzende Halterung 8d verbunden.

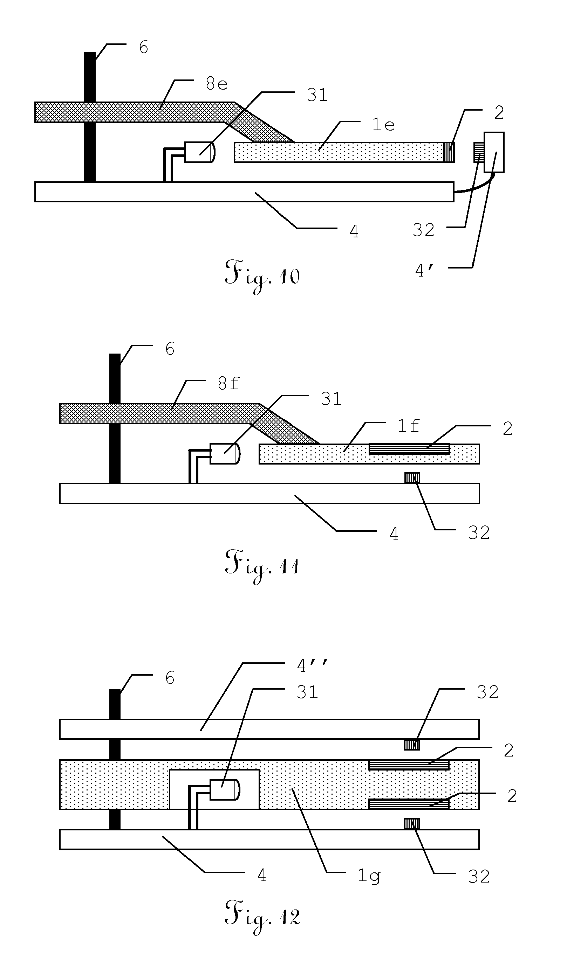

Eine zur Ausführungsform der Fig.9 ähnliche Variante wird in Fig.10 als fünfte Ausführungsform dargestellt, wobei hier das Erfassungselement 32 so angeordnet ist, dass dessen Empfangsrichtung ebenfalls parallel zur Leiterplatte 4 und in der Ebene des Codeträgers 1e verläuft. Hierzu kann das Erfassungselement 32 ebenfalls in zur Strahlungsquelle 31 analoger Weise mit abgewinkelten Kontaktelementen ausgeführt sein oder aber wie im gezeigten Beispiel auf einer eigenen Leiterplatte 4' aufgebracht sein, die wiederum ihrerseits gegenüber der die Strahlungsquelle 31 tragenden Leiterplatte 4 abgewinkelt angeordnet ist. In dieser Ausführungsform ist aufgrund der veränderten Strahlführung mit vollständig in der Ebene des Codeträgers 1e liegendem Strahlgang der Positionscode 2 an der Aussenfläche des ringförmigen Codeträgers 1e angeordnet. Auch ist wiederum der Codeträger 1e mit der Achse 6 über eine versetzende Halterung 8e verbunden

Fig.11 zeigt als eine sechste Ausführungsform ebenfalls eine zur Ausführungsform der Fig.9 ähnliche Variante mit identischer Anordnung von Strahlungsquelle 31 und Erfassungselement 32 auf der gemeinsamen Leiterplatte 4. Allerdings ist der Positionscode 2 innerhalb des Codeträgers 1f auf der dem Erfassungselement gegenüberliegenden Seite angeordnet, so dass die Projektion des Positionscodes 2 vor der Detektion durch das Erfassungselement 32 noch innerhalb des Materials des Codeträgers 1f geführt wird, d.h. das Erfassungselement 32 muss nicht notwendigerweise auf der gleichen Seite des Codeträgers 1f wie der Positionscode 2 angebracht sein.

Eine siebte Ausführungsform der Anordnung von Komponenten mit einer zusätzlichen Leiterplatte 4" wird in Fig.12 veranschaulicht. In dieser Ausführungsform ist die Strahlungsquelle 31 in einer den Fig.9-11 entsprechenden Weise auf einer Leiterplatte 4 befestigt, welche auch ein Erfassungselement 32 trägt. Ein zweites Erfassungselement 32 ist mit entgegengesetzter Empfangsrichtung auf einer zweiten Leiterplatte 4" befestigt, wobei diese parallel zur ersten Leiterplatte 4 verläuft und mit dieser eine gemeinsames fixes Bezugssystem gegenüber dem Codeträger 1g bilden. Hierbei sind beide Erfassungselemente 32 gegenüberliegend, d.h. mit gegeneinander gerichteten Empfangsrichtungen angeordnet. Die Strahlungsquelle 31 ist in einer Nut bzw. Rille des Codeträgers 1g so positioniert, dass deren Emission im Inneren des Codeträgers laufend nach aussen und damit über die Innenfläche der Nut in das Material des Codeträgers 1g erfolgt. Dieser weist nun an beiden gegenüberliegenden Stirnflächen zwei Positionscodes 2 von gleicher Art auf, wobei jedoch auch grundsätzlich unterschiedliche Codetypen erfindungsgemäss verwendbar sind. In diesem Beispiel sind sowohl Positionscodes 2 als auch Erfassungselemente 32 jeweils mit gleichem Abstand zum Drehzentrum angeordnet. Durch eine solche doppelte Auslegung können Fehler bestimmt werden, z.B. Achsfehler oder eine Verkippung des Codeträgers 1g. Ein solcher Fehler würde bspw. je nach Kipprichtung und Lage der Erfassungselemente 32 zu Kippachse zu einer gegenläufigen Verschiebung der radialen Position oder der Winkelposition des abgebildeten Codes führen, aus der dann auch die Verkippung bestimmt werden kann. Zudem kann die Verwendung von zwei Erfassungselementen 32 auch zur Genauigkeitssteigerung genutzt werden, z.B. durch Mittelwertbildung beider Drehlagen.

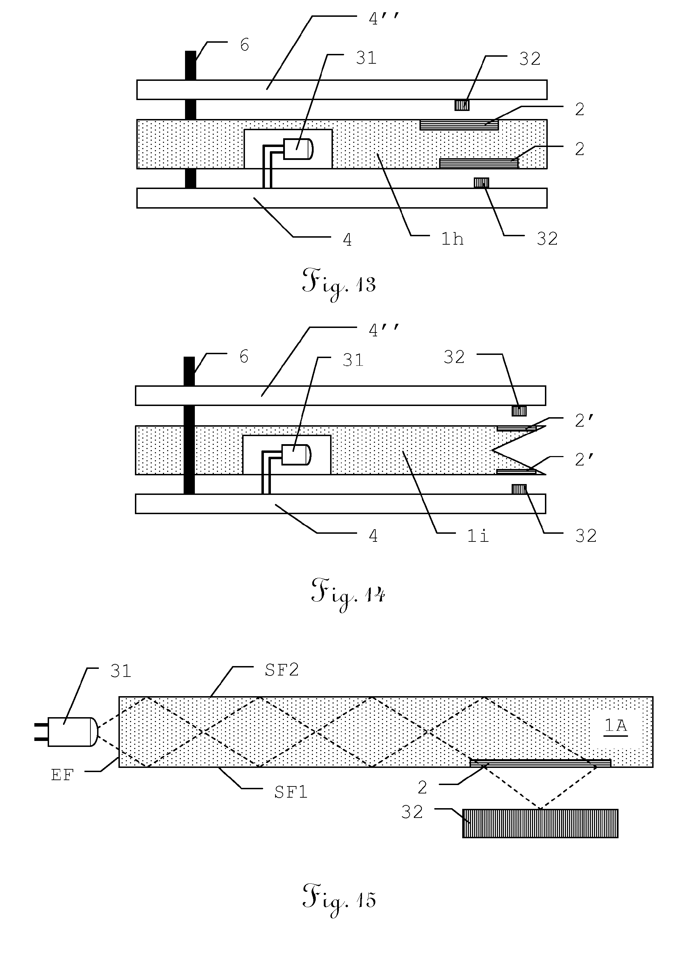

Eine ähnliche achte Ausführungsform wird in Fig.13 erläutert. Bei zum Beispiel aus Fig.12 grundsätzlich gleichem Aufbau sind die beiden Positionscodes 2 nun mit unterschiedlichem Abstand zum Drehzentrum bzw. zum Mittelpunkt des Codeträgers 1h angeordnet, was ebenfalls zur Fehlerkompensation oder zur Genauigkeitssteigerung genutzt werden kann.

Bei Verwendung einer breitbandigen Strahlungsquelle 31, z.B. einer weissen LED, kann durch ein oder mehrere Erfassungselemente 32 mit unterschiedlichen spektralen Charakteristiken eine mehrfache Auswertung erfolgen, z.B. indem auch entsprechend an eine speziellen Wellenlänge angepasste Gitter als Positionscodes 2 verwendet werden. Eine solche spektrale Empfindlichkeit kann beispielsweise durch Filter auf einem Flächenarrays als Erfassungskomponente 32 bewirkt werden. Die siebte und achte Ausführungsform erlauben durch die mehrfache Verwendung von Positionscode 2 und Erfassungskomponente 32 eine abgestimmte Auslegung der einzelnen Komponenten für unterschiedliche Wellenlängen oder Wellenlängenbereiche, so dass mehrfache Messungen möglich sind.

Fig.14 zeigt eine neunte Ausführungsform mit einem zur siebten und achten Ausführungsform analogem Aufbau und identischer Anordnung von Leiterplatten 4 und 4" sowie von Strahlungsquelle 31 und zwei Erfassungselementen 32. Allerdings ist der äussere Rand des Codeträgers 1i mit zwei zueinander gewinkelten Schrägflächen versehen, die einen Winkel von z.B. 45° zur oberen bzw. unteren Stirnfläche des Codeträgers 1i aufweisen. Die von der Strahlungsquelle 31 emittierte Strahlung wird durch diese zwei Flächen aufgeteilt und über die Positionscodes 2' auf das jeweils zugeordnete Erfassungselement 32 geführt. Dabei können die Positionscodes 2' neben einem stetigen und periodischen beispielsweise auch als unstetiges Amplitudengitter ausgeführt sein.

Verschiedene Varianten der erfindungsgemässen Strahlführung werden in den Fig.15-21 rein exemplarisch erläutert.

Fig.15 zeigt eine erste Ausführungsform der Strahlführung in einer erfindungsgemässen Lagemesseinrichtung, die dem in Fig.4-b dargestellten Beispiel entspricht. Die von der Strahlungsquelle 31 emittierte Strahlung wird über ein senkrecht zur Emissionsrichtung orientiertes Eintrittsfenster EF in den Codeträger 1A eingekoppelt und dort an den Stirnflächen SF1 und SF2 reflektiert. Durch die Reflexionen wird die Strahlung in der Ausdehnungsebene von Positionscode 2 bzw. Codeträger 1A bis hin zum Positionscode 2 geführt und dort auf das Erfassungselement 32 projiziert.

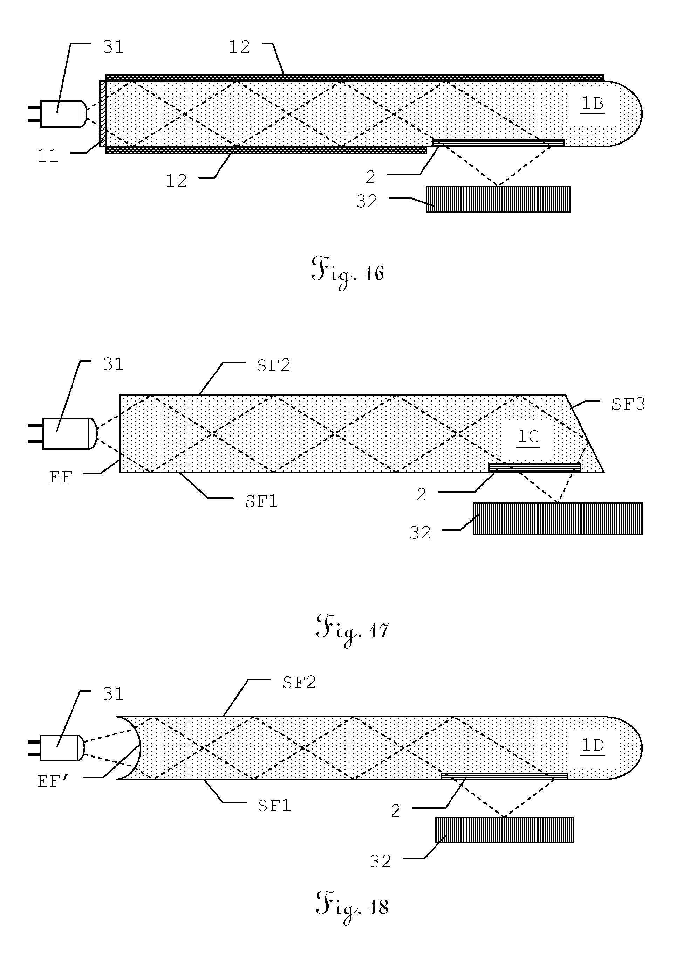

Einen ähnlichen Aufbau zeigt eine in Fig.16 dargestellte zweite Ausführungsform der Strahlführung, bei der auf dem Eintrittsfenster des Codeträgers 1B transmissionserhöhende Schicht 11 zur verbesserten Einkopplung der Strahlung aufgebracht ist. Neben der reflexionsverbessernden Polierung von Oberflächen können auf den Stirnflächen auch reflexionserhöhende Schichten 12 angeordnet werden, so dass die Strahlführung im Inneren des Codeträgers 1B verbessert wird. Zudem können solche Schichten weitere Eigenschaften bewirken, z.B. die Abriebfestigkeit bzw. Kratzfestigkeit des Codeträgers 1B erhöhen. Auch ist die Verwendung von Schichten nicht auf diese Variante beschränkt und es können weitere Schichten zur Unterstützung der Strahlführung verwendet werden, z.B. eine hier nicht dargestellte transmissionserhöhende Schicht als Austrittsfenster zur Auskopplung der Strahlung im Bereich des Positionscodes 2. Ausserdem ist in diesem Beispiel die dem Eintrittsfenster gegenüberliegende Fläche nicht rechtwinklig, sondern abgerundet und mit Linsenfunktion ausgebildet, wobei hierdurch eine zweite Strahlführung erfolgen kann, z.B. zur Auskopplung von Streulicht zur Steuerung der Strahlungsquelle 31.

Fig.17 zeigt eine dritte Ausführungsform der Strahlführung in einer erfindungsgemässen Lagemesseinrichtung mit einem in den Codeträger SF2 integrierten Umlenkelement. Hierzu wird an einer dem Eintrittsfenster EF gegenüberliegenden geneigten Grenzfläche eine Reflexion bewirkt, wobei in diese Beispiel hierzu ein Schrägschliff SF3 an der Aussenfläche des Codeträgers 1C angebracht wird. Durch diesen Schrägschliff wird zumindest ein Teil der Strahlung umgelenkt und auf den Positionscode 2 sowie das Erfassungselement 32 geführt. Neben der Ausbildung eines Schrägschliffes SF3 können jedoch auch andere optisch wirksame Elemente oder Ausgestaltungen von Randflächen oder internen Strukturen zum Einsatz kommen, z.B. als Prisma oder durch die Einbringung einer reflektierenden Schicht in das Material des Codeträgers 1C.

Eine vierte Ausführungsform der Strahlführung mit einem speziell geformten Eintrittsfenster EF' als divergenzänderndem Element wird in Fig.18 erläutert. Um eine optimierte Einkopplung und Strahlführung im Codeträger 1D zu bewirken, kann es vorteilhaft sein, wenn das Eintrittsfenster EF' eine strahlbeeinflussende, insbesondere divergenzändernde Wirkung aufweist. Dies kann beispielsweise durch Ausbildung einer Linsenform und damit auch Linsenfunktion erreicht werden, so dass eine grössere Freiheit in der Positionierung der Strahlungsquelle 31 folgt oder ein Verzicht auf ansonsten eventuell notwendige Optiken vor der Strahlungsquelle 31 möglich wird. Neben der Ausbildung einer Linsenstruktur im oder nach dem Eintrittsfenster EF' kann hierfür auch eine diffraktive Struktur verwendet werden, die beispielsweise direkt auf die Oberfläche eines ansonsten planaren Eintrittsfenster aufgebracht wird.

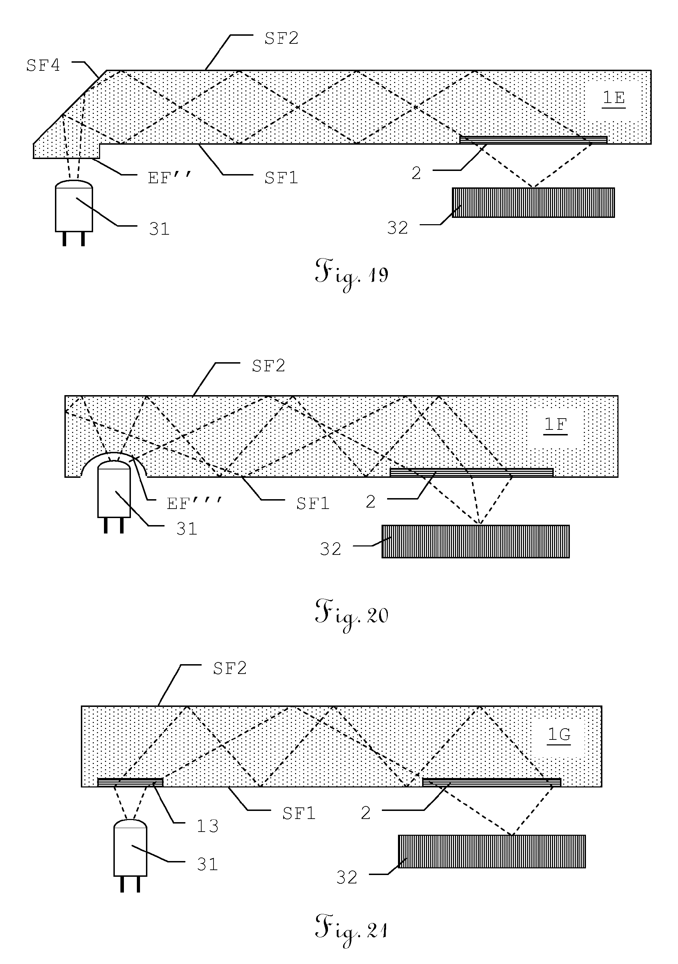

Fig.19 zeigt eine fünfte Ausführungsform der Strahlführung in einer erfindungsgemässen Lagemesseinrichtung, bei der eine zur Ausdehnungsebene des Codeträgers 1E bzw. der Ebene des Positionscodes 2 senkrechte Einkopplung erfolgt. In diesem Beispiel ist der Codeträger 1E an seinem Einkopplungsende abgewinkelt, so dass das Eintrittsfenster EF" parallel zu den Stirnflächen SF1 und SF2 orientiert ist. Die Strahlung wird somit durch das Eintrittsfenster EF" senkrecht zu den Stirnfläche SF1 und SF2 eingekoppelt und muss nachfolgend durch ein Umlenkelement, das hier beispielhaft als Schrägschliff SF4 ausgebildet ist, in ihrer Ausbreitungsrichtung verändert werden. Diese Anordnung weist den Vorteil auf, dass - wie auch in den Fig. 6 und 8 gezeigt - sowohl Strahlungsquelle 31 als auch Erfassungselement 32 auf einer Leiterplatte als gemeinsamer Trägerkomponente angeordnet werden können.

Den gleichen Vorteil bietet die in Fig.20 gezeigte sechste Ausführungsform der Strahlführung in einer erfindungsgemässen Lagemesseinrichtung. Hier wird die umlenkende Wirkung durch Reflexionen an der zur Einkopplungsrichtung parallelen Innenseite des Codeträgers 1F sowie einer Stirnseite SF2 bewirkt. Zudem ist das Eintrittsfenster EF"' mit gewölbter Oberfläche ausgebildet, so dass eine Linsenwirkung entsteht.

Fig.21 zeigt eine siebte Ausführungsform der Strahlführung in einer erfindungsgemässen Lagemesseinrichtung, bei dem als Eintrittsfenster eine diffraktive Struktur 13 verwendet wird, durch das eine fast beliebige Strahlbeeinflussung möglich ist. In diesem Beispiel erfolgt eine direkte Umlenkung aus der senkrecht zur Ebene des Positionscodes 2 erfolgenden Einkopplungsrichtung in ebendiese Ebene bzw. die Ausdehnungsebene des Codeträgers 1G.

Es versteht sich, dass diese dargestellten Figuren nur Beispiele und ausgewählte Aspekte möglicher Ausführungsformen darstellen. Insbesondere können verschiedene Elemente miteinander in anderen Zusammenstellungen kombiniert werden. So können beispielsweise Beschichtungen oder diffraktive Strukturen in allen Anordnungen verwendet werden oder auch komplexere Strahlführungen mit mehrfacher Umlenkung oder Strahlformung erfindungsgemäss realisiert werden. Ebenso sind die gezeigten Codeträger und Erfassungselemente sowie ihre relative Orientierung nur schematisch und beispielhaft zu verstehen. In allen Varianten können gleichermassen linear oder flächig ausgebildete Sensorkomponenten mit verschiedenen, auf die Form und Bewegungsrichtung des Codeträgers abgestimmter Orientierungen verwendet werden.

## Patentansprüche

1. Optoelektronische Lagemesseinrichtung, mit
• einem Codeträger (1,1a-i,1A-G), der wenigstens einen optisch erfassbaren Positionscode (2,2') trägt, insbesondere einen diffraktiven Code,
• einer Strahlungsquelle (31) zur Emission von optischer Strahlung, insbesondere eine LED oder Laserdiode, und
• wenigstens einem Erfassungselement (32) zum Empfang wenigstens eines Teiles der optischen Strahlung, insbesondere einem Zeilen- oder Flächensensor, wodurch ein vom Positionscode (2,2') abhängiges Signal erzeugbar und somit eine Lage des Codeträgers (1,1a-i,1A-G) relativ zum Erfassungselement (32) erfassbar ist,
wobei der Codeträger relativ zum Erfassungselement (32) mit einem Freiheitsgrad - insbesondere rotatorisch oder translatorisch - bewegbar ist,
**dadurch gekennzeichnet, dass**
die Strahlungsquelle (31) und der Codeträger (1,1a-i,1A-G) derart angeordnet und ausgebildet sind, dass
- die optische Strahlung in den Codeträger (1,1a-i,1AG) eingekoppelt und
- zumindest teilweise in einem in der Ausdehnungsebene des Codeträgers (1,1a-i,1A-G) liegenden Strahlgang im Inneren des Codeträgers (1,1a-i,1A-G) geführt wird, insbesondere bis zum Positionscode (2,2') geführt wird.

2. Optoelektronische Lagemesseinrichtung nach Anspruch 1,
**dadurch gekennzeichnet, dass**
der Codeträger (1,1a-i,1A-G) aus für die optische Strahlung durchlässigem Material ausgebildet ist, insbesondere aus Glas oder Polycarbonat.

3. Optoelektronische Lagemesseinrichtung nach einem der vorangehenden Ansprüche,
**dadurch gekennzeichnet, dass**
der Codeträger (1,1a-i,1A-G) im Strahlgang strahlformende und/oder strahlumlenkende Elemente (10, 13,EF',EF'",SF3,SF4) aufweist.

4. Optoelektronische Lagemesseinrichtung nach Anspruch 3,
**dadurch gekennzeichnet, dass**
der Codeträger ein Prisma, eine reflektierende Schicht oder einen Schrägschliff als strahlumlenkende Elemente (10,SF3,SF4) aufweist.

5. Optoelektronische Lagemesseinrichtung nach einem der vorangehenden Ansprüche,
**dadurch gekennzeichnet, dass**
der Codeträger (1D,1F,G) als Eintrittsfenster ein divergenzänderndes Element (13,EF',EF'") aufweist, insbesondere eine Linsenstruktur oder eine diffraktive Struktur.

6. Optoelektronische Lagemesseinrichtung nach einem der vorangehenden Ansprüche,
**dadurch gekennzeichnet, dass**
- ein weiteres Erfassungselement (32) vorhanden ist,
- der Codeträger zwei gegenüberliegende Positionscodes (2,2') aufweist und
- jedem der zwei Positionscodes (2,2') jeweils eines der Erfassungselemente (32) zum Empfang der über den jeweiligen Positionscode (2,2') geführten Strahlung zugeordnet ist.

7. Optoelektronische Lagemesseinrichtung nach einem der vorangehenden Ansprüche,
**dadurch gekennzeichnet, dass**
der Codeträger (1,1a-i,1A-G) polierte Flächen aufweist.

8. Optoelektronische Lagemesseinrichtung nach einem der vorangehenden Ansprüche,
**dadurch gekennzeichnet, dass**
der Codeträger (1B) wenigstens eine reflexionserhöhende Schicht (12) und/oder eine transmissionserhöhende Schicht (11) zur Ein- und/oder Auskopplung der Strahlung aufweist.

9. Optoelektronische Lagemesseinrichtung nach einem der vorangehenden Ansprüche,
**dadurch gekennzeichnet, dass**
zwischen Strahlungsquelle (31) und Positionscode (2,2') oder zwischen Positionscode (2,2') und Erfassungselement (32) eine Blende und/oder ein abbildendes optisches System (9) angeordnet ist.

10. Optoelektronische Lagemesseinrichtung nach einem der vorangehenden Ansprüche,
**dadurch gekennzeichnet, dass**
der Codeträger (1,1a-i,1A-G) eine ring- oder scheibenförmige Geometrie besitzt.

11. Optoelektronische Lagemesseinrichtung nach Anspruch 10,
**dadurch gekennzeichnet, dass**
dass die optische Strahlung radial von innen oder aussen in den Codeträger (1,1a-b,ld-i,1A-D) eingekoppelt wird.

12. Optoelektronische Lagemesseinrichtung nach Anspruch 10,
**dadurch gekennzeichnet, dass**
die optische Strahlung in axialer Richtung durch eine der Stirnflächen in den Codeträger (1c,1E-G) eingekoppelt wird.

13. Optoelektronische Lagemesseinrichtung nach Anspruch 12,
**dadurch gekennzeichnet, dass**
die Strahlungsquelle (31) und wenigstens ein Erfassungselement (32) auf derselben Seite des Codeträgers (1,1a-i,1A-D), insbesondere auf einer gemeinsamen Leiterplatte (4) angeordnet, sind.

14. Optoelektronisches Lagemessverfahren zum Bestimmen einer Lage, insbesondere eines Winkels oder einer Länge, eines Codeträgers (1,1a-i,1A-G), der wenigstens einen Positionscode (2,2') trägt und relativ zu wenigstens einem Erfassungselement (32) mit einem Freiheitsgrad, insbesondere rotatorisch oder translatorisch, beweglich ist, mit einem
• Erzeugen einer von der Lage des Codeträgers (1,1a-i,1A-G) abhängigen Projektion eines Teiles des Positionscodes (2,2') auf dem Erfassungselement (32),
wobei das Erzeugen mindestens
□ ein Emittieren von optischer Strahlung auf den Positionscode (2,2') und
□ in Erfassen der Projektion durch das Erfassungselement (32) beinhaltet, und
• Ableiten der Lage des Codeträgers (1,1a-i,1A-G) relativ zum Erfassungselement (32) aus der Projektion,
**dadurch gekennzeichnet, dass**
- die optische Strahlung in den Codeträger (1,1a-i,1AG) eingekoppelt und
- zumindest teilweise in einem in der Ausdehnungsebene des Codeträgers (1,1a-i,1A-G) liegenden Strahlgang im Inneren des Codeträgers (1,1a-i,1A-G) geführt wird, insbesondere bis zum Positionscode (2,2') geführt wird.

15. Optoelektronisches Lagemessverfahren nach Anspruch 14,
**dadurch gekennzeichnet, dass**
die optische Strahlung auf derselben Seite in den Codeträger (1c,1E-G) eingekoppelt, auf der das Erfassen der Projektion durch das wenigstens eine Erfassungselement (32) erfolgt.
